# EUROPÄISCHE PATENTSCHRIFT

(11) **EP 1 880 427 B1**
(45) Veröffentlichungstag und Bekanntmachung des Hinweises auf die Patenterteilung: **20.08.2008**
(21) Anmeldenummer: 05747656.6
(22) Anmeldetag: 12.05.2005
(51) Int. Cl.: H01L 41/09

(54) **MINIATURISIERTE ZWEIACHSEN-PIEZO-BETÄTIGUNGSEINRICHTUNG**
MINIATURIZED BIAXIAL PIEZO ACTUATING DEVICE
DISPOSITIF MINIATURISE D'ACTIONNEMENT PIEZO DANS DEUX AXES

(43) Veröffentlichungstag der Anmeldung: 23.01.2008
(73) Patentinhaber: Physik Instrumente (PI) GmbH & Co. KG, 76228 Karlsruhe (DE)
(72) Erfinder: POLLAK, Klaus, 78144 Tennenbronn (DE); GÜNTER, Stephan, 70499 Stuttgart-Weilimdorf (DE)
(74) Vertreter: Kruspig, Volkmar
(86) Internationale Anmeldenummer: PCT/EP2005/005198
(87) Internationale Veröffentlichungsnummer: WO 2006/119792

(56) Entgegenhaltungen:
- WO-A-97/20354
- DE-A1- 4 214 220
- DE-A1- 19 643 180
- DE-A1- 19 826 984
- DE-A1- 19 940 124

## Beschreibung

Die Erfindung betrifft eine miniaturisierte Zweiachsen-Piezo-Betätigungseinrichtung mit mindestens zwei Piezoaktuatoren sowie kraftübertragenden Hebelelementen und Festkörper-Biegegelenken als insgesamt flache, tischförmige Baugruppe zur Mikropositionierung und Bewegungssteuerung von optischen, mechanischen oder sonstigen Einheiten, gemäß Oberbegriff des Patentanspruchs 1.

Piezoaktive Betätigungseinrichtungen mit hoher Steifigkeit, die eine erste Baugruppe beinhalten, die aus einem mechanischen Bewegungsverstärker besteht, und welche eine zweite Baugruppe aufweisen, die lineare piezoaktive Elemente enthält, sind beispielsweise aus der DE 196 43 180 A1 vorbekannt.

Bei einer derartigen Vorrichtung zur Bewegungsverstärkung ist ein System von Gelenken und Hebelarmen vorgesehen, wobei sich die gewünschte Verstärkung der Bewegung dadurch ergibt, dass ein piezoelektrisches Teil auf die Hebelarme einwirkt. Die Gelenke bilden elastische Drehpunkte, die mittels lokaler verdünnter Stellen in einer Struktur hergestellt werden, so dass sich eine Biegeelastizität einstellt. Probleme derartiger Vorrichtungen liegen in der geringen mechanischen Steifigkeit infolge des auf die Gelenke zurückzuführenden Elastizitätseffekts. Die von einem solchen System erzeugten Kräfte sind gering und schränken die Effektivität und Wirksamkeit der Betätigungseinrichtung ein.

Ein weiteres Problem bei bekannten Betätigungseinrichtungen ist die notwendige Beseitigung des Spiels. Eine bekannte Lösung zur Beseitigung des Spiels besteht in Justierteilen aus metallischen Materialien, die nach Einstellung eine starre mechanische Verbindung mit den piezoaktiven Elementen bilden, und zwar in Form einer Druckausübung entlang der Querachse. Gemäß DE 196 43 180 A1 besitzt das dortige Justierteil zur Beseitigung des longitudinalen Spiels eine Schräge, die entlang einer gegenüber der Längsachse des mechanischen Verstärkers schiefen Ebene gleitend beweglich ist.

Bei dem piezoaktiven Motor mit unabhängigen Statormodulen nach EP 0 910 871 B1 ist eine Feinpositionierung möglich, wobei hierfür jedes Statormodul ein Paar von piezoaktiven Betätigungsvorrichtungen umfasst, die kolinear angeordnet und elektrisch erregt sind, um eine Verformung zu erzeugen, die zu kleinen Längsbewegungen führt. Außerdem ist ein mechanisches Kupplungselement vorhanden, an das die Bewegungen der vorgesehenen zwei Betätigungsvorrichtungen übertragbar ist, wobei das genannte Kupplungselement aus einem elastisch verformbaren Material hergestellt ist und aus einem als eine Schale ausgestalteten Ring besteht, der jedes Paar von Betätigungsvorrichtungen durch Befestigung an zwei gegenüberliegenden Stellen umgibt.

Es hat sich jedoch gezeigt, dass bei den vorstehend erläuterten Lösungen des Standes der Technik eine Miniaturisierung nicht ohne weiteres möglich ist und eine gewünschte hohe Bewegungsdynamik nicht erreicht werden kann.

Es ist daher Aufgabe der Erfindung, eine weiterentwickelte miniaturisierte Zweiachsen-Piezo-Betätigungseinrichtung mit mindestens zwei Piezoaktuatoren sowie kraftübertragenden Hebelelementen und Festkörper-Biegegelenken anzugeben, welche mit geringem Fertigungsaufwand realisierbar ist und die die gewünschten Steifigkeiten bei ausreichender Bewegungsdynamik gewährleistet. Die zu schaffende Piezo-Betätigungseinrichtung soll so ausgeführt werden, dass die eigentlichen Piezoaktuatoren in die Einrichtung integrierbar sind und wobei mit einer minimalen Anzahl von Aktuatoren in reproduzierbarer Weise Bewegungen in unterschiedlichen Achsenrichtungen erzeugt werden können.

Die Lösung der Aufgabe der Erfindung erfolgt durch eine miniaturisierte Zweiachsen-Piezo-Betätigungseinrichtung mit mindestens zwei Piezoaktuatoren sowie kraftübertragenden Hebelelementen und Festkörper-Biegegelenken als insgesamt flache, tischförmige Baugruppe gemäß den Merkmalen des Patentanspruchs 1, wobei die Unteransprüche mindestens zweckmäßige Ausgestaltungen und Weiterbildungen beinhalten.

Demnach wird erfindungsgemäß zunächst davon ausgegangen, einen Trägerrahmen zu bilden, innerhalb dessen eine im wesentlichen rechteckige oder quadratische Platte zur Aufnahme oder Befestigung der zu positionierenden oder zu bewegenden Einheiten vorgesehen ist.
Die Platte wird gegenüber dem Trägerrahmen mittels spezieller Festkörper-Biegegelenke geführt bzw. gelagert. Die Festkörper-Biegegelenke erstrecken sich bevorzugt jeweils vom Platteneckbereich zum jeweiligen Eckbereich im Inneren des Trägerrahmens.

In zwei orthogonal zueinander liegenden Achsen im Bereich zwischen Trägerrahmen und Platte oder aber auch im Rahmen eingebettet ist jeweils mindestens ein Piezoaktor angeordnet, wobei diese Piezoaktuatoren bewegungsseitig an den jeweils benachbarten, hebelartig ausgebildeten Festkörper-Biegegelenken angreifen.

Im Schnittpunkt der orthogonal zueinander liegenden Achsen ist ein spezielles Doppelgelenk zur Entkopplung der Piezoaktoren bzw. der Bewegung ausgebildet. Das dem Doppelgelenk diagonal gegenüberliegende Gelenk ist wiederum als Kompensationsgelenk zur Reduzierung der Verkippung der Platte bei deren Bewegung ausgeführt.

Durch die spezielle Integration von Führungen und Hebeln ergibt sich insgesamt eine kompakte Bauweise der erfindungsgemäßen Einrichtung. Dadurch, dass keine definierten, statischen Gelenkpunkte, sondern Festkörper-Biegegelenke vorgesehen sind, ergeben sich die mit der Aufgabenstellung angestrebten Vorteile. Eine Kinematik mit idealen Gelenken wäre zu unbestimmt und erforderte nachteiligerweise zusätzliche diskrete Führungselemente. Die Hebelübersetzung ist durch verschiedene, leicht zu variierende Ausführungsformen der Festkörper-Biegegelenke veränderbar.

Die eine Hebelfunktion aufweisenden Festkörper-Biegegelenke weisen eine im wesentlichen V-Form auf, wobei ein Schenkel des jeweiligen Gelenks mit der Platte und der weitere Schenkel des jeweiligen Gelenks mit dem Trägerrahmen verbunden ist. Im Schenkelschnittpunkt greift dann der jeweilige Piezoaktor, z.B. ein Stapelaktor an.

Das vorerwähnte Doppelgelenk zur Entkopplung ist als ein am Schenkel gespiegeltes, symmetrisches V-förmiges Gelenk ausgeführt und weist genügend Bewegungsspielraum beim Aktivieren der jeweiligen Piezoaktoren auf.

Das Kompensationsgelenk besteht aus einem offenen kreuzförmigen Gelenk, dessen sich kreuzende Achsen im wesentlichen parallel bzw. entlang der rechteckigen oder quadratischen Platte verlaufen. Im Kreuzungsschnittpunkt des Kompensationsgelenks ist einerseits eine Verbindung mit dem Trägerrahmen und andererseits eine Verbindung mit der Platte vorgesehen. Bei einer Bewegung der Platte erzeugt das Kreuzungsgelenk eine Rückstellkraft, die zu einer Stabilisierung der Bewegung der Platte führt, und zwar auch dann, wenn z.B. ein einzelner Aktor eine Dehnungsbewegung ausführt, mit der Folge der sich dann ergebenden Längsverschiebung der Platte innerhalb des offenen Bereichs des Trägerrahmens.

Die Schenkel der V-förmigen Gelenke erstrecken sich mindestens teilweise in eine jeweilige Aussparung von Trägerrahmen und Platte, so dass sich durch diese Maßnahme eine weitere Verkleinerung der Gesamtanordnung erreichen lässt.

Zwischen Trägerrahmen und Platte ist je nach gewünschtem Bewegungsmaß ein Bewegungsspalt vorgesehen.

Bei Auslenkung einer der Piezoaktoren führt die im Trägerrahmen befindliche Platte eine Bewegung jeweils in x- oder y-Richtung; bei Auslenkung beider Aktoren führt die Platte eine Bewegung in x-y- oder y-x-Richtung bzw. in resultierender diagonaler Richtung aus.

Erfindungsgemäß kann die Gesamtanordnung aus Trägerrahmen, Platte und Gelenken einstückig ausgeführt und beispielsweise mittels Erodiertechnik oder Lasertrennen hergestellt werden.

Die Exaktheit bei der Herstellung der Gelenke bestimmt das rotatorische Übersprechen um die Z-Achse bei Auslenkung in X- oder Y-Richtung. Es wurde nachgewiesen, dass in überraschender Weise unter Nutzung eines aktiven Abgleichsprozesses das Übersprechen deutlich reduzierbar ist. Der Abgleichsprozess selbst stellt sich als definiertes Abtragen der Gelenkdicken mittels z.B. Fräsen dar. Bei einem nicht abgeglichenen Gelenk stellt sich eine unerwünschte Rotation um Z bei Ansteuerung in X- und/oder Y-Richtung von ca. 60 µrad ein. Im abgeglichenen Zustand beträgt die Rotation um Z bei Ansteuerung in X- und/oder Y-Richtung < 10 µrad.

Die Erfindung soll nachstehend anhand eines Ausführungsbeispiels sowie unter Zuhilfenahme von Figuren näher erläutert werden.

Hierbei zeigen:

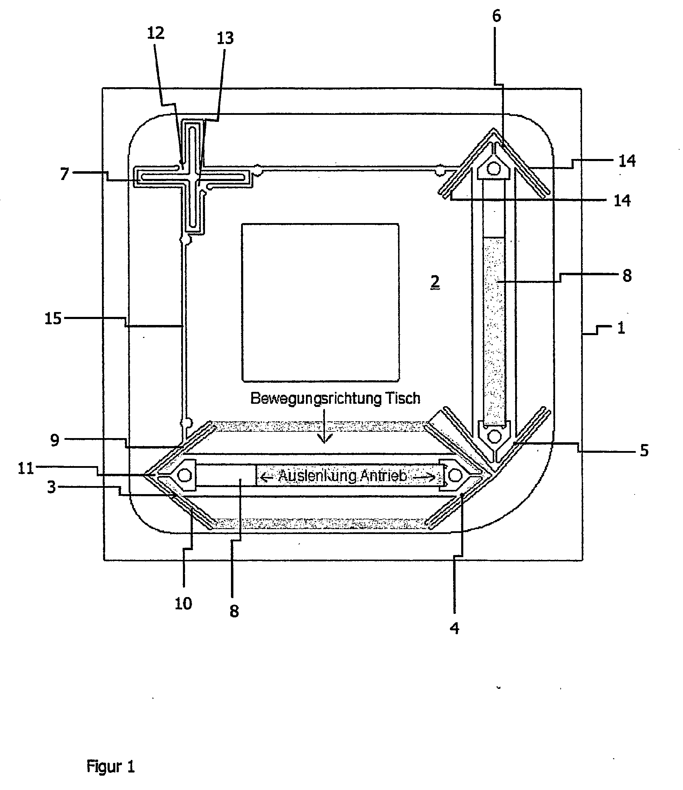

- Fig. 1: eine Draufsicht-Prinzipdarstellung der miniaturisierten ZweiachsenPiezo-Betätigungseinrichtung und
- Fig. 2: verschiedene Darstellungen der Wirkung der Festkörper-Biegegelenke bzw. des Kompensationsgelenks beim Ausführen von Bewegungen unter Rückgriff auf die jeweiligen Piezoaktuatoren.

Die erfindungsgemäße miniaturisierte Zweiachsen-Piezo-Betätigungseinrichtung besteht aus einem Trägerrahmen 1, z.B. aus einem metallischen Material.

Innerhalb des Trägerrahmens 1 ist eine Platte 2 befindlich, welche geeignet ist, z.B. einen Spiegel, Linsen, Fasern im Bereich der Optik, einen Positionierkopf als CD-ROM-Leseeinrichtung oder dergleichen aufzunehmen.

Wie ersichtlich, ist die Platte 2 gegenüber dem Trägerrahmen 1 mittels spezieller Festkörper-Biegegelenke geführt und gelagert.

Diese Festkörper-Biegegelenke 3 bis 6 erstrecken sich jeweils vom Platteneckbereich zum Trägerrahmen 1, und zwar hier zum jeweils gegenüberliegenden inneren Eckbereich des vorerwähnten Trägerrahmens 1.

In zwei orthogonal zueinander liegenden Achsen ist im Bereich des Trägerrahmens 1 bzw. im Bereich zwischen Trägerrahmen 1 und Platte 2 jeweils mindestens ein Piezoaktor 8 integriert. Diese Piezoaktuatoren 8 greifen bewegungsseitig an den jeweils benachbarten, hebelartig ausgebildeten Festkörper-Biegegelenken 3 und 4 bzw. 5 und 6 an.

Das im Schnittpunkt der orthogonal zueinander liegenden Achsen befindliche Gelenk 4/5 ist als Doppelgelenk zur Entkopplung der Piezoaktoren 8 ausgebildet.

Das dem Doppelgelenk 4/5 diagonal gegenüberliegende Festkörpergelenk ist ein Kompensationsgelenk 7 zur Reduzierung der Verkippung der Platte 2.

Die eine Hebelfunktion aufweisenden Festkörper-Biegegelenke 3, 4, 5, 6 besitzen bevorzugt eine V-Form, wobei ein erster Schenkel 9 mit der Platte 2 und ein zweiter Schenkel 10 mit dem Trägerrahmen 1 verbunden ist.

Im Schenkelschnittpunkt 11 greift der jeweilige Piezoaktor 8 an.

Das Doppelgelenk 4/5 ist als ein an den jeweiligen Schenkeln 9 und 10 gespiegeltes, symmetrisches, V-förmiges weiteres Gelenk ausgeführt.

Das Kompensationsgelenk 7 stellt ein offenes Kreuzgelenk dar, welches im Kreuzungsschnittpunkt einerseits (Bezugszeichen 12) mit dem Trägerrahmen 1 und andererseits (Bezugszeichen 13) mit der Platte 2 verbunden ist.

Die Schenkel 9 bzw. 10 der V-förmigen Gelenke 3, 4, 5 und 6 erstrecken sich mindestens teilweise in Aussparungen 14 entweder innerhalb der Platte 2 bzw. des Trägerrahmens 1.

Zwischen Trägerrahmen 1 und Platte 2 ist ein Bewegungsspalt 15 entsprechend der gewünschten Verstellbarkeit der Platte, die, wie bereits erwähnt, als Aufnahmetisch für z.B. optische Elemente dient, vorgesehen.

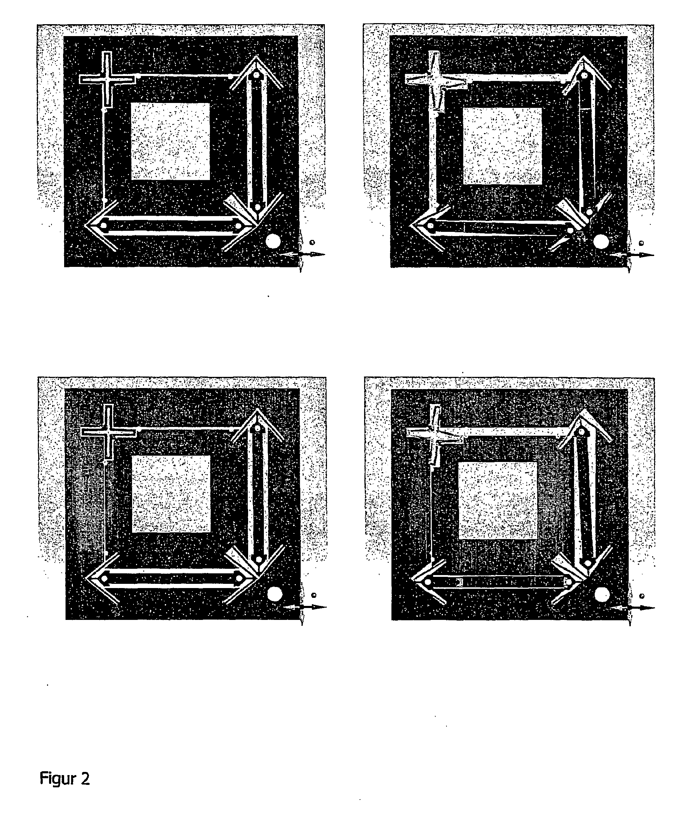

Fig. 2 zeigt nunmehr einerseits im oberen Bildteil eine Darstellung, wie sich die Bewegung der Platte 2 beim Aktivieren beider Piezoaktoren 8 ergibt, und zwar in diesem Fall als Bewegung in x-y-Richtung. Hier ist im einzelnen erkennbar, wie sich die Wirkung und Bewegung der Festkörper-Biegegelenke 3, 4, 5 und 6 darstellt und welchen Verformungen das Kompensationsgelenk 7 unterliegt.

Bei der Darstellung im unteren Teil gemäß Fig. 2 erfolgt ein Aktivieren des unteren, im Bild horizontal verlaufenden Piezoaktors 8 mit der Folge einer y-Verschiebung der Platte 2. Auch hier ist die stabilisierende Wirkung des Kompensationsgelenks und die Doppelfunktion der Festkörper-Biegegelenke hinsichtlich Führung und Hebelübersetzung erkennbar.

### Bezugszeichenliste

- 1: Trägerrahmen
- 2: Platte
- 3 bis 6: Festkörper-Biegegelenke
- 7: Kompensationsgelenk
- 8: Piezoaktuator
- 9: erster Schenkel
- 10: zweiter Schenkel
- 11: Schenkelschnittpunkt
- 12;13: Verbindungspunkte des Kompensationsgelenks
- 14: Aussparung
- 15: Bewegungsspalt

## Patentansprüche

1. Miniaturisierte Zweiachsen-Piezo-Betätigungseinrichtung mit mindestens zwei Piezoaktuatoren sowie kraftübertragenden Hebelelementen und Festkörper-Biegegelenken als insgesamt flache, tischförmige Baugruppe zur Mikropositionierung und Bewegungssteuerung von optischen, mechanischen oder sonstigen Einheiten,
**dadurch gekennzeichnet, dass**
innerhalb eines Trägerrahmens (1) eine im wesentlichen rechteckige oder quadratische Platte (2) zur Aufnahme oder Befestigung der zu positionierenden oder zu bewegenden Einheiten vorgesehen ist, wobei die Platte gegenüber dem Trägerrahmen mittels der Festkörper-Biegegelenke (3-6) geführt ist und die Festkörper-Biegegelenke sich jeweils vom Platteneckbereich zum Trägerrahmen erstrecken,
weiterhin in zwei orthogonal zueinander liegenden Achsen im Bereich zwischen Trägerrahmen und Platte jeweils mindestens ein Piezoaktor (8) angeordnet ist, wobei diese bewegungsseitig an den jeweils benachbarten, hebelartig ausgebildeten Festkörper-Biegegelenken (3 und 4 bzw 5 und 6) angreifen,
das im Schnittpunkt der orthogonal zueinander liegenden Achsen befindliche Gelenk (4/5) als Doppelgelenk zur Entkopplung der Piezoaktoren ausgebildet und das dem Doppelgelenk diagonal gegenüberliegende Gelenk als ein Kompen-sationsgelenk (7) zur Reduzierung der Verkippung der Platte ausgeführt ist.

2. Miniaturisierte Zweiachsen-Piezo-Betätigungseinrichtung nach Anspruch 1,
**dadurch gekennzeichnet, dass**
die eine Hebelfunktion aufweisenden Festkörper-Biegegelenke eine V-Form besitzen, wobei ein Schenkel mit der Platte und der weitere Schenkel mit dem Trägerrahmen verbunden ist sowie im Schenkelschnittpunkt der jeweilige Piezoaktor angreift.

3. Miniaturisierte Zweiachsen-Piezo-Betätigungseinrichtung nach Anspruch 1 oder 2,
**dadurch gekennzeichnet, dass**
das Doppelgelenk als ein im Schenkel gespiegeltes, symmetrisches V-förmiges Gelenk ausgeführt ist.

4. Miniaturisierte Zweiachsen-Piezo-Betätigungseinrichtung nach einem der vorangegangenen Ansprüche,
**dadurch gekennzeichnet, dass**
das Kompensationsgelenk ein offenes Kreuzgelenk ist, welches im Kreuzungs-schnittpunkt einerseits (12) mit dem Trägerrahmen (1) und andererseits (13) mit der Platte (2) verbunden ist.

5. Miniaturisierte Zweiachsen-Piezo-Betätigungseinrichtung nach Anspruch 2,
**dadurch gekennzeichnet, dass**
die Schenkel der V-förmigen Gelenke sich mindestens teilweise in eine jeweiligen Aussparung (14) von Trägerrahmen und Platte erstrecken.

6. Miniaturisierte Zweiachsen-Piezo-Betätigungseinrichtung nach einem der vorangegangenen Ansprüche,
**dadurch gekennzeichnet, dass**
zwischen Trägerrahmen und Platte ein Bewegungsspalt vorgesehen ist.

7. Miniaturisierte Zweiachsen-Piezo-Betätigungseinrichtung nach einem der vorangegangenen Ansprüche,
**dadurch gekennzeichnet, dass**
bei Auslenkung einer der Piezoaktuatoren die Platte eine Bewegung jeweils in x- oder y-Richtung und bei Auslenkung beider Aktuatoren die Platte eine Bewegung in x-y- oder y-x-Richtung ausführt.

8. Miniaturisierte Zweiachsen-Piezo-Betätigungseinrichtung nach einem der vorangegangenen Ansprüche,
**dadurch gekennzeichnet, dass**
die Festkörper-Biegelenke eine hohe Biegesteifigkeit aufweisen.

9. Miniaturisierte Zweiachsen-Piezo-Betätigungseinrichtung nach einem der vorangegangenen Ansprüche,
**dadurch gekennzeichnet, dass**
die Gesamtanordnung aus Trägerrahmen, Platte und Gelenken einstückig durch beispielsweise Erodiertechnik oder Lasertrennen ausgebildet ist.

## Claims

1. A miniaturized two-axis piezoelectric actuating device, comprising at least two piezoelectric actuators as well as force-transmitting lever elements and solid-state bending joints forming as a whole a flat, table-type assembly for the micropositioning and motion control of optical, mechanical or other units,
**characterized in that**
a substantially rectangular or square plate (2) for receiving or fixing the units to be positioned or to be moved is provided inside a support frame (1), wherein the plate is guided with respect to the support frame by means of the solid-state bending joints (3 to 6) and the solid-state bending joints each extend from the corner region of the plate to the support frame,
further at least one piezoelectric actuator (8) is arranged in the region between the support frame and the plate along two axes orthogonal with respect to each other, wherein these piezoelectric actuators act in the direction of the motion on the respectively adjacent lever-type solid-state bending joints (3 and 4 and 5 and 6, respectively),
the joint (4, 5) disposed on the intersection point of the axes orthogonal with respect to each other is formed as a double joint for decoupling the piezoelectric actuators and the joint disposed diagonally opposite to the double joint is formed as a compensating joint (7) for reducing the tilting of the plate.

2. The miniaturized two-axis piezoelectric actuating device according to claim 1,
**characterized in that**
the solid-state bending elements having a lever function are V-shaped, wherein one leg is connected to the plate and the other leg is connected to the support frame and the respective piezoelectric actuator acts on the intersection point of the legs.

3. The miniaturized two-axis piezoelectric actuating device according to claim 1 or 2,
**characterized in that**
the double joint is realized as a symmetric V-shaped joint and is mirrored on a V-axis.

4. The miniaturized two-axis piezoelectric actuating device according to one of the preceding claims,
**characterized in that**
the compensating joint is an open universal joint connected on the intersection point to the support frame (1) on the one side (12) and to the plate (2) on the other side (13).

5. The miniaturized two-axis piezoelectric actuating device according to claim 2,
**characterized in that**
the legs of the V-shaped joints extend at least partially into a respective recess (14) of the support frame and the plate.

6. The miniaturized two-axis piezoelectric actuating device according to one of the preceding claims,
**characterized in that**
a movement gap is provided between the support frame and the plate.

7. The miniaturized two-axis piezoelectric actuating device according to one of the preceding claims,
**characterized in that**
upon a motion of one of the piezoelectric actuators the plate performs a motion in the x- or y-direction and upon a motion of both actuators the plate performs a motion in the x-y- or y-x-direction.

8. The miniaturized two-axis piezoelectric actuating device according to one of the preceding claims,
**characterized in that**
the solid-state bending joints have a high bending strength.

9. The miniaturized two-axis piezoelectric actuating device according to one of the preceding claims,
**characterized in that**
the overall assembly comprised of support frame, plate and joints is realized integrally, for example, by means of eroding technology or laser cutting.

## Revendications

1. Dispositif miniaturisé d'actionnement piézo-électrique suivant deux axes, comportant au moins deux piézo-actionneurs ainsi que des éléments de levier transmetteurs de force et des articulations flexibles à corps solide sous la forme d'un groupe structurel dans l'ensemble plat et en forme de table pour le micro-positionnement et la commande de mouvement d'unités optiques, mécaniques ou autres,
**caractérisé en ce que**
à l'intérieur d'un cadre porteur (1) est prévue une plaque (2) sensiblement rectangulaire ou carrée pour recevoir ou fixer les unités à positionner ou à déplacer, la plaque étant guidée par rapport au cadre porteur au moyen des articulations flexibles à corps solide (3 - 6) et les articulations flexibles à corps solide s'étendant chacune de la zone de coin de plaque jusqu'au cadre porteur,
au moins un piézo-actionneur (8) est agencé respectivement dans deux axes orthogonaux l'un à l'autre dans la zone entre le cadre porteur et la plaque, ces piézo-actionneurs attaquant du côté mouvement les articulations flexibles à corps solide (3 et 4 ou 5 et 6) respectives voisines réalisées en forme de levier,
l'articulation (4/5) située au point d'intersection des axes orthogonaux l'un à l'autre est réalisée sous forme d'articulation double pour découpler les piézo-actionneurs, et l'articulation diamétralement opposée à l'articulation double est réalisée sous la forme d'une articulation de compensation (7) pour réduire le basculement de la plaque.

2. Dispositif miniaturisé d'actionnement piézoélectrique suivant deux axes selon la revendication 1,
**caractérisé en ce que**
les articulations flexibles à corps solide présentant une fonction de levier possèdent une forme en V, dont une branche est reliée à la plaque et l'autre branche est reliée au cadre porteur, et le piézo-actionneur respectif attaque au point d'intersection des branches.

3. Dispositif miniaturisé d'actionnement piézoélectrique suivant deux axes selon la revendication 1 ou 2,
**caractérisé en ce que**
l'articulation double est réalisée sous la forme d'une articulation symétrique en V à branches symétriques.

4. Dispositif miniaturisé d'actionnement piézoélectrique suivant deux axes selon l'une des revendications précédentes,
**caractérisé en ce que**
l'articulation de compensation est une articulation à croisillon ouverte qui est reliée, au point d'intersection de croisillon, d'une part (112) au cadre porteur (1) et d'autre part (113) à la plaque (2).

5. Dispositif miniaturisé d'actionnement piézoélectrique suivant deux axes selon la revendication 2, **caractérisé en ce que**
les branches des articulations en forme de V s'étendent au moins partiellement dans une échancrure respective (14) du cadre porteur et de la plaque.

6. Dispositif miniaturisé d'actionnement piézoélectrique suivant deux axes selon l'une des revendications précédentes,
**caractérisé en ce que**
un intervalle de mobilité est prévu entre le cadre porteur et la plaque.

7. Dispositif miniaturisé d'actionnement piézoélectrique suivant deux axes selon l'une des revendications précédentes,
**caractérisé en ce que**
lors d'une déviation de l'un des piézo-actionneurs, la plaque exécute un mouvement respectif dans la direction x ou y, et lors d'une déviation des deux actionneurs, la plaque exécute un mouvement dans la direction x-y ou y-x.

8. Dispositif miniaturisé d'actionnement piézoélectrique suivant deux axes selon l'une des revendications précédentes,
**caractérisé en ce que**
les articulations flexibles à corps solide présente une rigidité en flexion élevée.

9. Dispositif miniaturisé d'actionnement piézoélectrique suivant deux axes selon l'une des revendications précédentes,
**caractérisé en ce que**
l'ensemble de l'agencement constitué du cadre porteur, de la plaque et des articulations est réalisé d'un seul tenant par exemple par une technique d'érosion ou par découpe au laser.
